(19)

**Europäisches Patentamt**
**European Patent Office**
**Office européen des brevets**

(11) **EP 1 927 906 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
***G05B 19/19*** *(2006.01)*

(21) Anmeldenummer: **07014251.8**

(22) Anmeldetag: **20.07.2007**

(54) **Verfahren und Vorrichtung zur Lageregelung wenigstens eines Paares von Bewegungsachsen einer Maschine**

Method and device for position control of at least one pair of moveable axes of a machine

Procédé et dispositif destinés à la régulation de l'orientation d'au moins une paire d'axes de mobilité d'un moteur

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.11.2006 DE 102006056080**

(43) Veröffentlichungstag der Anmeldung:
**04.06.2008 Patentblatt 2008/23**

(73) Patentinhaber: **ROBERT BOSCH GMBH**
**70442 Stuttgart (DE)**

(72) Erfinder:
• **Schmitt, Alexander**
**97737 Dettelbach (DE)**
• **Wahler, Matthias**
**97450 Arnstein-Müdesheim (DE)**
• **Lippert, Michael**
**97737 Gemünden (DE)**

(74) Vertreter: **Thürer, Andreas**
**Bosch Rexroth AG**
**Intellectual Property**
**Zum Eisengiesser 1**
**97816 Lohr am Main (DE)**

(56) Entgegenhaltungen:
**EP-A- 0 585 677        EP-A- 1 657 619**
**DE-A1- 4 420 598        DE-A1- 10 104 795**
**DE-A1- 10 309 670**

• **BONG KEUN KIM ET AL: "Robust synchronizing motion control of twin-servo systems based on network modeling" DECISION AND CONTROL, 2000. PROCEEDINGS OF THE 39TH IEEE CONFERENCE ON DEC. 12-15, 2000, PISCATAWAY, NJ, USA,IEEE, Bd. 1, 12. Dezember 2000 (2000-12-12), Seiten 1019-1024, XP010536903 ISBN: 0-7803-6638-7**
• **PRITSCHOW G ET AL: "HOCHGENAUE ACHSSYNCHRONISATION MIT EINEM KONFIGURIERBAREN BAHNMODUL" WERKSTATTSTECHNIK, SPRINGER VERLAG. BERLIN, DE, Bd. 79, Nr. 11, 1. November 1989 (1989-11-01), Seiten 633-636, XP000084078 ISSN: 0340-4544**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung zur Positionierung nach dem Oberbegriff des Patentanspruchs 1 bzw. dem Oberbegriff des Patentanspruchs 7.

Stand der Technik

Die DE 44 20 598 A1 offenbart ein Verfahren zur numerisch gesteuerten Lageregelung gekoppelter Achsen aus mindestens einem Leit-/Folgeachspaar, um eine bessere Geschwindigkeits- und Lage-Synchronlaufqualität zu erzielen. Ansätze zur Synchronisierung mehrerer Achsen sind auch in den Artikeln "Robust synchronizing motiön control of twin-servo systems based on network modeling" von Bong Keun Kim u.a., Decision and Control, 2000. Proceedings of the 39th IEEE Conference on Dec. 12-15, 2000, Vol:1, p. 1019 - 1024 und "Hochgenaue Achssynchronisation mit einem konfigurierbaren Bahnmodul" von G. Pritschow u.a., WERKSTATTSTECHNIK, Springer Verlag. Berlin, Vol:79, Nr:11, p. 633 - 636 sowie der DE 101 04 795 A1 angegeben. Die vorliegende Erfindung betrifft jedoch im Gegensatz dazu ein Verfahren sowie eine Vorrichtung zur Positionierung wenigstens eines Paares von Bewegungsachsen einer Maschine, welche parallel zueinander verlaufen, zum Anfahren einer vorgegebenen Zielposition.

Hintergrund der Erfindung

Eine Maschine oder eine einzelne Achse einer Maschine neigt aufgrund ihrer Strukturdynamik zu Schwingungen, und stellt somit eine Begrenzung bezüglich der maximal möglichen Reglerdynamik und damit Maschinen-Produktivität dar. Es ist wünschenswert, immer dann, wenn man mit einer Strukturmechanik an derartige Grenzen gelangt, d. h. die Positionierdynamik und der mechanischen Eigenschaften begrenzt ist, eine einfache nachrüstbare Lösung bereitstellen zu können, mit der die Gesamtperformance der Maschine gesteigert werden kann.

Maschinen oder Achsen werden bei Positioniervorgängen in der Betriebsart "Lageregelung" betrieben. Zielsetzung hierbei ist es, einem Lage-Sollwertverlauf möglichst genau, d. h. mit minimalem Schleppfehler, zu folgen.

Zur Regelung der Positionierung (Lageregelung) der einzelnen Achsen einer Maschine (Motor und angebaute Mechanik) ist die sogenannten Kaskadenregelung bekannt.. Diese Kaskadenregelung besteht aus einem Lageregelkreis mit unterlagertem Drehzahlregelkreis, dem wiederum ein Stromregler unterlagert ist.

Der Stromregelkreis einer Kaskadenregelung besteht in der Regel aus einem PI-Regler, einem leistungselektronischen Stellglied und dem elektrischen Teil des Motors. Als Drehzahlregler wird typischerweise ein PI-Regler eingesetzt, und als Lageregler ein P-Regler.

Um eine vorgegebene Zielposition anzufahren, werden dem Antrieb eine Folge von Lagesollwerten vorgegeben. Die Regelung versucht dann, den Motor so anzusteuern, dass der Antrieb bzw. Motor den Lagesollwerten möglichst verzögerungsfrei (schleppabstandsfrei) folgen kann. Derartige Kaskadenregelungen führen zu erheblichen Abweichungen zwischen Soll- und Istlagen. Diese Abweichungen (Schleppabstände) sind in zahlreichen Anwendungen nicht hinnehmbar.

Für viele Anwendungen ist es vielmehr erwünscht, dass der Lageistwert dem Lagesollwert im wesentlichen verzögerungsfrei folgt (d. h. Schleppabstand minimal). Zur Realisierung dieser Vorgabe werden hochdynamische Antriebe verwendet, die bezüglich der bereits erwähnten Kaskadenregelung typischerweise um eine Geschwindigkeits- und Beschleunigungsvorsteuerung erweitert sind.

Durch eine derartige Vorsteuerung wird auf der einen Seite der Schleppabstand minimiert, auf der anderen Seite wird jedoch auch die Strukturdynamik einer Maschine bzw. einer Achse angeregt, wenn es sich um sehr dynamische Lagesollwerte, d. h. beispielsweise um sprungförmige Änderungen der Sollbeschleunigung und Sollgeschwindigkeit, handelt. Hierdurch kann es zu unerwünschten Schwingungen kommen, die in der begrenzten Strukturdynamik aufgrund der mechanischen Eigenschaften der Maschine begründet sind.

Wenn nun die mechanischen Eigenschaften der Maschine nicht veränderlich sind, aber dennoch im wesentlichen verzögerungsfrei positioniert werden soll, muss nach neuen Lösungsansätzen gesucht werden.

Im Rahmen eines bekannten Ansatzes wird im Rahmen einer aktiven Schwingungsdämpfung die Schwingung einer Maschine bzw. einer Achse erfasst und durch zusätzliche Regelungsalgorithmen gedämpft. Diese Vorgehensweise erfordert einen zusätzlichen Mess-Sensor (beispielsweise einen Beschleunigungssensor) und eine Technologiefunktion, d. h. zusätzliche Algorithmen, im Antrieb. Dieser Lösungsansatz ist insofern nicht ideal, als Schwingungen weiterhin vorhanden sind, und lediglich verzögert ausgeregelt werden.

Mit der Erfindung wird angestrebt, eine verbesserte. Maschinenkinematik zur Verfügung zu stellen, bei der auftretende Schleppfehler minimierbar sind.

Diese Aufgabe wird gelöst durch ein Verfahren mit den Merkmalen des Patentanspruchs 1 sowie eine Vorrichtung mit den Merkmalen des Patentanspruchs 5.

Vorteile der Erfindung

Mit der erfindungsgemäßen Lösung, eine Lageregelung bzw. Positionierung in eine Grobpositionierung einer ersten Bewegungsachse, und eine Feinpositionierung einer zweiten Bewegungsachse zu zerlegen, wobei die erste Bewegungsachse (dynamische Achse) eine größere Schwingneigung aufweist als die zweite Bewegungsachse (undynamische Achse), und den Einsatz eines prädiktiven Schleppfehlermodells lassen sich auftretende Schleppfehler in relativ einfacher und unaufwendiger Weise minimieren.

Insbesondere kann mit der Verwendung eines prädiktiven Schleppfehlermodells vermieden werden, dass zur Durchführung der Regelung zunächst ein Vergleich zwischen Lage-Istwert und Lage-Sollwert durch Messung vorgenommen werden muss, wobei eine gemessene Abweichung einer Steuervorrichtung zugeführt wird, die ihrerseits eine Positionskorrektur für die erste oder zweite Achse berechnet. Eine derartige Vorgehensweise wird als relativ rechenintensiv und daher langsam angesehen.

Vorteilhafte Ausgestaltungen der Erfindung sind Gegenstand der Unteransprüche.

Es ist bevorzugt, dass das prädiktive Schleppfehlermodell weiter mittels einer Ist-Position der ersten Bewegungsachse korrigiert wird. Eine derartige Korrektur gestattet ohne unverhältnismäßigen Rechenaufwand in effektiver Weise eine weitere Präzisierung des erfindungsgemäßen Verfahrens zur Lageregelung.

Besonders bevorzugt wird die Ist-Position der ersten Bewegungsachse dem Antrieb der zweiten Bewegungsachse über eine zyklische Kommunikationsschnittstelle zur Verfügung gestellt. Eine derartige direkte Kommunikation zwischen den jeweiligen Antrieben der ersten und zweiten Bewegungsachse ermöglicht eine besonders leistungsfähige Regelung.

Zweckmäßigerweise wird eine übergeordnete Steuerung verwendet zur Übergabe von Positions-Sollwerten an die jeweiligen Antriebe der Bewegungsachsen.

Eine derartige Steuerung kann zweckmäßigerweise mit einer SERCOS-Schnittstelle ausgebildet sein, wodurch eine besonders effektive Kommunikation zwischen den Antrieben und der übergeordneten Steuerung möglich ist.

Das erfindungsgemäß Verfahren ist in besonders vorteilhafter Weise einsetzbar bei einer Stanz-Lasermaschine, aber auch bei anderen Maschinen, in denen eine schnelle und dynamische Positionierung von Bewegungsachsen in ein, zwei oder drei Dimensionen notwendig ist.

Figurenbeschreibung

Die Erfindung wird anhand der beigefügten Zeichnung im folgenden weiter erläutert. In dieser zeigt

Figur 1    eine perspektivische Ansicht einer Stanz-Lasermaschine, bei der das erfindungsgemäße Verfahren vorteilhaft anwendbar ist,

Figur 2    ein Schaubild zur weiteren Erläuterung der betrachteten Lagen- bzw. Trajektorien und Schleppabstände der Bewegungsachsen der Stanz-Lasermaschine gemäß Figur 1,

Figur 3    ein Blockschaltbild zur Erläuterung einer bevorzugten Ausführungsform des erfindungsgemäßen Verfahrens, mit der insbesondere die Maschine gemäß Fig. 1 steuerbar bzw. regelbar ist,

Figur 4    ein Blockschaltbild einer bevorzugten Ausführungsform des erfindungsgemäß verwendeten Lageregelkreises, und

Figur 5    ein Blockschaltbild zur weiteren Erläuterung des erfindungsgemäßen Verfahrens.

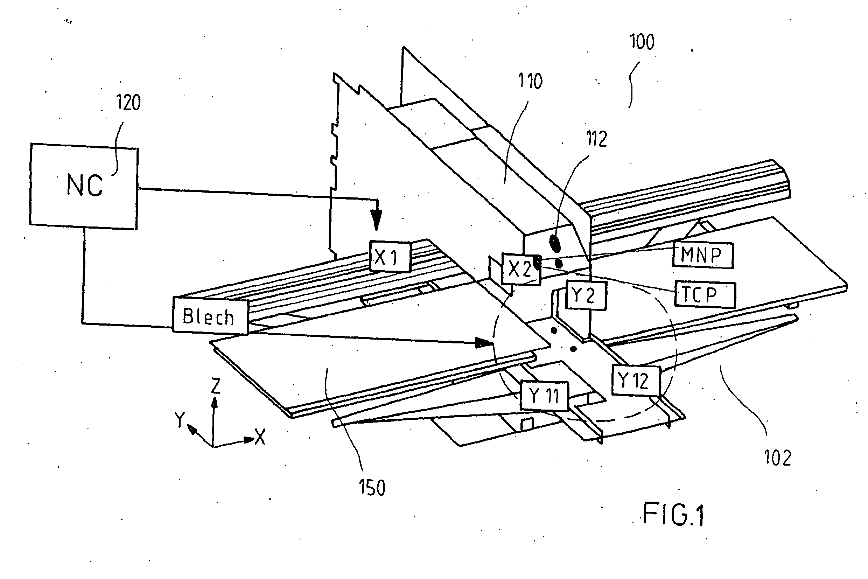

Eine Stanz-Lasermaschine ist in Fig. 1 insgesamt mit 100 bezeichnet. Die Maschine weist einen Tisch 102 auf, der in x-Richtung entlang einer Tischachse x1 und in y-Richtung entlang einer Achse y1 verfahrbar ist. Mittels dieser Tischachsen x1, x2 ist ein auf dem Tisch 102 positioniertes Blech 150 positionierbar.

Die Maschine weist ferner eine Lasereinrichtung 110 auf, welche mit einem Laserkopf 112 ausgebildet ist. Der Laserkopf 112 ist in x-Richtung entlang einer Achse x2, und in y-Richtung entlang einer Achse y2 positionierbar.

Soll das Blech 150 von dem Laserkopf bearbeitet werden, d. h. sollen z. B. Konturen gelasert werden, so muss das Blech 150 verzögerungsfrei (schleppabstandsfrei) bezüglich des Laserkopfs 112 positioniert werden.

Im Falle einer mehrdimensionalen Positionierung spricht man von Solltrajektorien, die der Tisch 102 (und damit das auf dem Tisch 102 angeordnete Blech 150) ausführen sollen. Die zeitliche Abfolge von Solltrajektorien bildet eine Sollbahn, und die Zerlegung in die einzelnen Koordinatensysteme die Lagesollwerte für die jeweiligen Achsen.

Die Maschine 100 weist eine (schematisch dargestellte) numerische Steuerung 120 auf, welche diese Lagesollwerte den (nicht im einzelnen dargestellten) Antrieben der jeweiligen Achsen x1, y1', x2, y2 zur Verfügung stellt.

Die Tischachsen x1, y1 bzw. Blechachsen erhalten üblicherweise bezogen auf den Maschinennullpunkt MNP, der identisch mit dem Nullpunkt des Laserkopfes ist (Werkzeugnullpunkt bzw. "Tool Centre Point" TCP), ihre Lagesollwerte. Die Lageistwerte ergeben sich aus dem Abstand von Blech und TCP.

Wenn, wie im vorliegenden Fall, zusätzliche Achsen (Laserachsen x2, y2) zum Einsatz kommen, sind die Lagesollwerte des Bleches zweckmäßigerweise auf den MNP bezogen, und die Lageistwerte auf den TCP, wobei, wie im folgenden erläutert wird, der TCP nun über die Laserachsen in einem eingeschränkten Verfahrbereich positioniert werden kann.

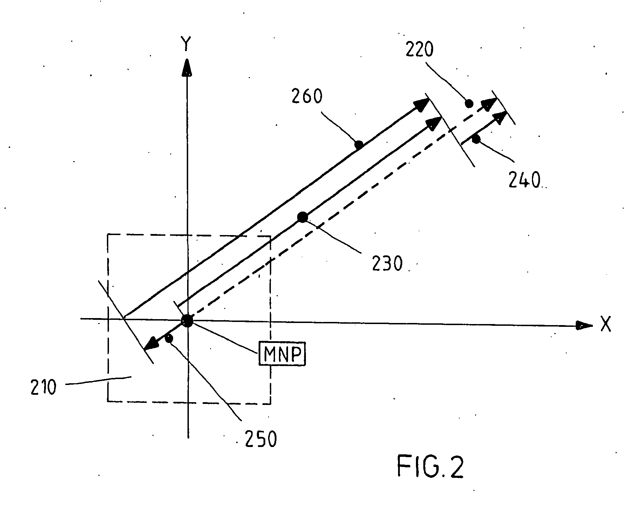

Dieser Sachverhalt sei nun beispielhaft anhand der Figur 2 dargestellt.

Man erkennt, dass der Punkt MNP im Nullpunkt des Koordinatensystems XY liegt. Aus der Verfahrbarkeit des Laserkopfes 112 ergibt sich ein Verfahrbereich für den Punkt TCP, welcher als gepunktet dargestelltes Quadrat 210 bezeichnet ist. Ein Soll-Abstand des Tisches 102 und damit des Bleches 150 auf einer Solltrajektorie ist mit 220 bezeichnet. Aufgrund beispielsweise von Schwingungen und nicht-idealer Steifheit des Tisches 102 kommt es zu einer Differenz zwischen dem Soll-Abstand 220 und einem Ist-Abstand 230. Dieser Abstand wird als Schleppabstand bezeichnet (hier mit 240 bezeichnet). Aufgrund der bereits erwähnten Positionierbarkeit des Laserkopfes, d. h. des Punktes TCP, ist dieser Schleppabstand 240 durch eine entsprechende Verschiebung des TCP kompensierbar. Diese Verschiebung, d. h. der Ist-Abstand des TCP vom Maschinennullpunkt MNP ist mit 250 bezeichnet. Schließlich ist der Anschaulichkeit halber der Ist-Abstand zwischen TCP und Tisch dargestellt und mit 260 bezeichnet.

Da also insgesamt die Tischachsen x1, y1 gemäß Fig. 1 schleppabstandbehaftet positioniert werden, ergibt sich ein Schleppabstand 240 für den Tisch 102, der durch die Laserachsen x2, y2 in entgegengesetzter Richtung kompensiert werden muss, damit der Abstand zwischen dem Blech und dem TCP (Ist-Abstand 260 zwischen Tisch und TCP) in Betrag und Richtung dem Soll-Abstand entspricht.

Die Achsen x1, y1 des Tisches 102 weisen aufgrund ihrer mechanischen Eigenschaft eine relativ große Schwingneigung auf, und werden daher zweckmäßigerweise relativ "weich" parametriert. Bei diesen Achsen x1, y1 handelt es sich somit um undynamische Achsen bzw. nichtverzögerungsfreie Bewegungs- bzw. Positionierachsen.

Die Achsen x2, y2 des Laserkopfes weisen hingegen im wesentlichen keine Schwingneigung auf. Derartige "dynamische Achsen" sind daher zweckmäßigerweise sehr "hart" zu parametrieren. Eine derartige Parametrierung ist mittels Vorsteuerung erzielbar.

Gemäß der vorliegenden Erfindung erfolgt eine Zerlegung der Positionierung des Tisches 102 bzw. des Bleches 150 bezüglich des Laserkopfes in eine Grobpositionierung der (undynamischen) Achsen x1, y1 und eine Feinpositionierung der (dynamischen) Achsen x2, y2. Ferner wird ein Schleppfehlermodell zur prädiktiven Schleppfehlerermittlung bzw. Lagesollwertgenerierung für die verzögerungsfreie Positionierung der Achsen x2, y2 und die Schleppfehlerkompensation der Achsen x1, y1 verwendet.

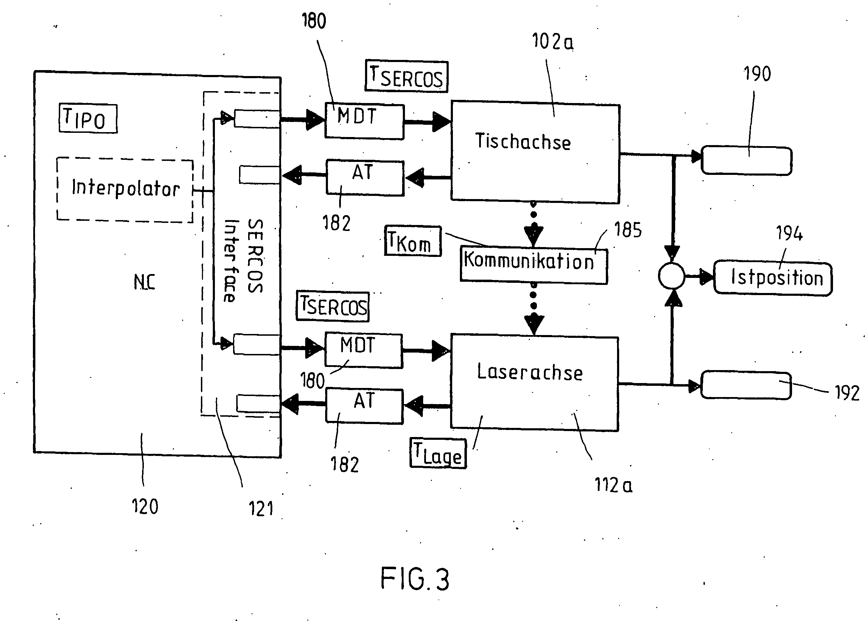

Diese Zusammenhänge werden nun anhand der Fig. 3 weiter erläutert.

Die Steuerung 120, welche mit einer Sercos-Schnittstelle . 121 ausgebildet ist, übergibt Lagesollwerte an die Antriebe der Tischachsen x1, y1 und der Laserachsen x2, y2. Der Antrieb für die Tischachsen ist schematisch mittels Block 102a, der Antrieb für die Laserachsen mittels Block 112a dargestellt. Diese Bereitstellung der Lagesollwerte erfolgt bevorzugt über ein Master-Daten-Telegramm MDT, hier mit 180 bezeichnet.

Eine Steuerung des Antriebs 112a der Laserachsen x2, y2 bestimmt aufgrund eines Schleppfehlermodells, welches weiter unten im einzelnen erläutert wird, auf der Grundlage bekannter Parameter der Maschine 100 prädiktiv einen Schleppfehler der Tischachsen x1, y1. Dieser Schleppfehler wird korrigiert mittels einer Ist-Positionierung der Tischachsen x1, y1, welche dem Antrieb 112a unmittelbar von dem Antrieb 102a über eine zyklische Kommunikationsschnittstelle 185 bereitgestellt wird. Die Kommunikationsschnittstelle 185 kann sowohl analog als auch als CCD (Cross Communication Drive) realisiert werden.

Die Ermittlung des Schleppfehlers der Tischachsen x1, y1 wird somit derart berechnet, dass der Schleppfehler bereits (im wesentlichen) bekannt ist, bevor er überhaupt auftritt ("Prädiktion"). Damit kann der Summenschleppfehler der Tisch- und Laserachsen gegenüber einer einfachen Übertragung des real auftretenden Schleppfehlers von den Tischachsen auf die Laserachsen minimiert werden.

Wie in Fig. 3 ferner zu erkennen, erfolgt die Grobpositionierung der Tischachsen x1, y1 über einen Lage-Ist-Positionsgeber 190, und die Feinpositionierung der Laserachsen über einen weiteren Lage-Ist-Positionsgeber 192. Insgesamt ergibt sich somit die kompensierte bzw. ausgeregelte Ist-Position für das auf dem Tisch 102 liegende Blech 150 (in Fig. 3 mit 194 bezeichnet).

Es sei angemerkt, dass eine Kommunikation zwischen den Antrieben 102a und 112a und der Steuerung 120 über ein Antriebstelegramm AT (in Figur 3 mit 182 bezeichnet) erfolgen kann. Zeitkonstanten der verschiedenen Komponenten sind jeweils mit "'T plus Index" bezeichnet.

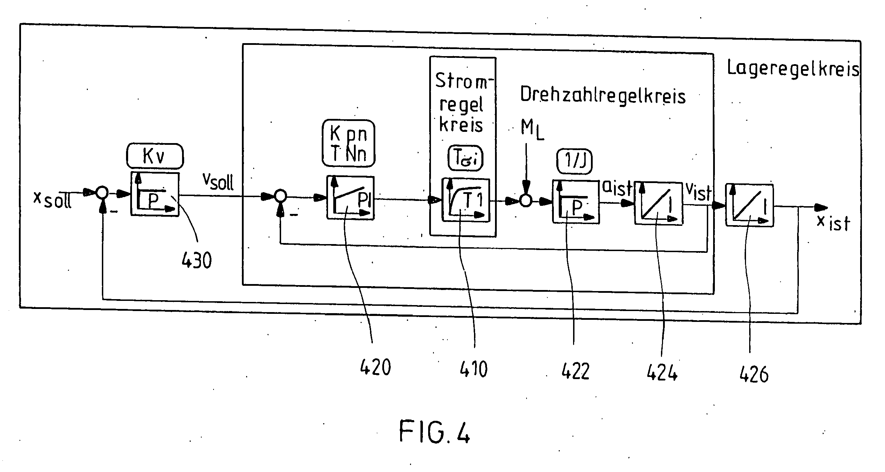

Im folgenden wird unter Bezugnahme auf Fig. 4 eine bevorzugte Regelung einer Achse der Maschine dargestellt, wobei die Darstellung insbesondere für eine ideale Mechanik dargestellt wird.

Der dargestellte Stromregelkreis bestehend aus PI-Regler, leistungselektronischem Stellglied und dem elektrischen Teil des Motors ist vereinfacht bzw. zusammengefasst zu einem P-T1-Glied 410 mit einer Stromregelkreis-

Ersatzzeitkonstanten $T_{\sigma i}$ dargestellt. Als Drehzahlregler wird ein TI-Regler 420, und als Lageregler ein P-Regler 430 eingesetzt.

Der Drehzahlregelkreis weist ferner einen weiteren P-Regler und einen I-Regler 424 auf. Der Lageregelkreis weist einen weiteren I-Regler 426 auf. $K_V$ bezeichnet die Lageregler-Proportionalverstärkung, $T_{NU}$ die Drehzahlregler-Nachstellzeit, $K_{pn}$ die Drehzahlregler-Proportionalverstärkung und I ein Trägheitsmoment.

Um eine vorgegebene Zielposition anzufahren, werden dem Antrieb eine Folge von Lagesollwerten $x_{soll}$ vorgegeben. Die Regelung versucht, den Motor so anzusteuern, dass dieser den Lagesollwerten möglichst verzögerungsfrei (schleppabstandsfrei) folgen kann. Man erkennt, dass es während der dargestellten Regelung zu einer Betrachtung bzw. Verwertung des Geschwindigkeitssollwertes $v_{soll}$, eines Beschleunigungs-Istwertes $a_{ist}$ und eines Geschwindigkeits-Istwertes $V_{ist}$ kommt. Der Ausgang des Lageregelkreises ist der Lageistwert $x_{ist}$. Der Lageregelkreis gemäß Fig. 4 stellt einen geschlossenen Lageregelkreis ohne Vorsteuerungen mit ideal steifer Mechanik dar. Eine zeitkontinuierliche Übertragungsfunktion dieses Lageregelkreises ergibt ein System (Übertragungsfunktion) $F_{gx}$ dritter Ordnung:

$$F_{gx} = \frac{x_{ist}}{x_{soll}} =$$

$$= \frac{\left(1 + s\,\alpha^2 T_{\sigma i}\right)}{1 + s\left(\alpha^2 T_{\sigma i} + \frac{1}{K_V}\right) + s^2\left(\frac{\alpha^2 T_{\sigma i}}{K_V}\right) + s^3\left(\frac{\alpha^3 T_{\sigma i}^2}{K_V}\right) + s^4\left(\frac{\alpha^3 T_{\sigma i}^3}{K_V}\right)};$$

$$= \frac{\left(1 + s\,\alpha^2 T_{\sigma i}\right)}{1 + s\,\alpha^2 T_{\sigma i}\left(1 + \frac{1}{K_V\left(\alpha^2 T_{\sigma i}\right)}\right) + s^2\left(\frac{\alpha^2 T_{\sigma i}}{K_V}\right) + s^3\left(\frac{\alpha^3 T_{\sigma i}^2}{K_V}\right) + s^4\left(\frac{\alpha^3 T_{\sigma i}^3}{K_V}\right)};$$

Hierbei stellen $K_V$ die Lageregler-Proportionalverstärkung $T_{\sigma i}$ wie erwähnt die Stromreglerkreisersatzzeitkonstante und $\alpha$ eine Hilfsvariable dar.

Die Hilfsvariable $\alpha$ ist gegeben durch:

$$\alpha = \sqrt{\frac{T_{Nn}}{T_{\sigma i}}} > 1;$$

Der Schleppfehler $\varepsilon$ kann nun berechnet werden aus

$$\varepsilon = x_{soll} - x_{ist} = x_{soll} - F_{gx}(s) * x_{soll}.$$

Die Übertragungsfunktion $F_{gx}$ kann zu einem T1-Glied mit der Zeitkonstanten $1/K_V$ vereinfacht werden, etwa in der Form:

$$F_{gx}(s) = x_{ist}/x_{soll} \approx 1/(1 + 1/Kv * s).$$

Da im Antrieb die Regelung in einem Mikrocontroller ausgeführt wird, wird die vereinfachte Übertragungsfunktion in das Zeitdiskrete überführt und mit Hilfe einer Differenzengleichung der Modellschleppfehler $\varepsilon^*$ berechnet. Insgesamt ergibt sich

$$\varepsilon^* = x_{soll} - x_{ist} = x_{soll} - H_{gx}(z) * x_{soll}.$$

H ist hierbei eine zeitdiskrete Übertragungsfunktion. Da gemäß der vorliegenden Erfindung der Modellschleppfehler aus dem Sollwert berechnet wird, ist er im Gegensatz zum realen Schleppabstand, der aus Soll- und Ist-Wert berechnet wird, ohne Rauschanteil.

Da ferner der Modellschleppfehler in dem Regelungszyklus berechnet wird, in dem auch der Lagesollwert vorgegeben wird, liegt dieser Wert, wie bereits erwähnt, prädiktiv vor, im Gegensatz zum realen Schleppabstand, der erst im nächsten Regelungszyklus als Antriebsreaktion auf den Lagesollwert bestimmt wird.

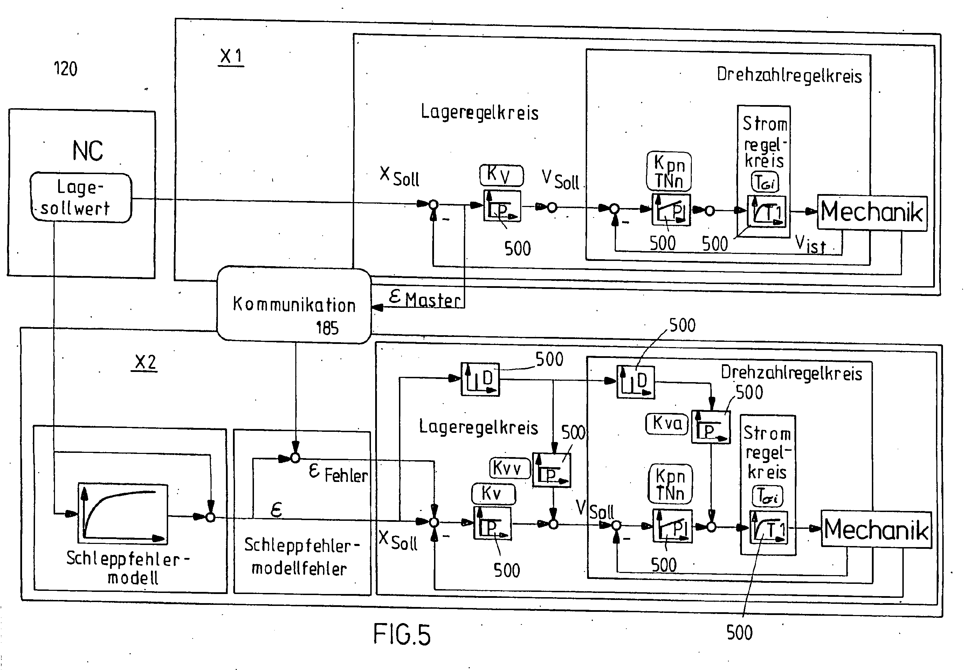

Unter einer direkten Sollwertkopplung, wie sie erfindungsgemäß realisiert wird, versteht man, dass von einer Masterachse an eine oder mehrere Slaveachsen Werte wie etwa Lageistwerte, Sollwerte, usw. übermittelt werden, aus denen dann die Slaveachse zum Beispiel die Sollwerte ableitet. Diese Zusammenhänge werden nun anhand der Figur 5 noch einmal erläutert. Bezugszeichen, die bereits in den übrigen Figuren verwendet wurden, werden nicht noch einmal explizit genannt. Verschiedene verwendete Regler, welche hier auch D-Regler umfassen, sind mit 500 bezeichnet.

Bei der hier beschriebenen Anordnung ist die beispielsweise undynamische Tischachse x1 der Master, und die dynamische Laserachse x2 der Slave. Der Master übermittelt dem Slave über die Kommunikationsschnittstelle 185 den Schleppabstand (SA bzw. $\varepsilon_{Master}$). Im Slave wird der Schleppfehlermodellfehler $\varepsilon_{Fehler}$ berechnet ($\varepsilon_{Fehler} = \varepsilon_{Master} - \varepsilon^*$), und als Korrektur dem Slave-Lagesollwert $x_{soll}$ aufgeschaltet. Der Lagesollwert des Slave setzt sich aus zwei Anteilen zusammen, zum einen dem Modellschleppfehler $\varepsilon^*$, der aus dem Master-Lagesollwert (MC-Lagesollwert) berechnet wird, und dem Schleppfehlermodellfehler $\varepsilon_{Fehler}$. Es sei noch einmal darauf hingewiesen, dass nur der Modellschleppfehler zur Berechnung der Vorsteuerwerte (Geschwindigkeitsvorsteuerung $K_{VV}$ und Beschleunigungsvorsteuerung $K_{VA}$) verwendet wird, da dieser prädiktiv und rauschfrei ist, und der Schleppfehlermodellfehler lediglich als Korrekturwert auf den Lagesollwert für den P-Regler ($K_V$) aufgeschaltet wird.

Bezugszeichen

| | |
|---|---|
| 100 | Stanz-Lasermaschine |
| 102 | Tisch |
| 102a | Antrieb Tischachse |
| 110 | Lasereinrichtung |
| 112 | Laserkopf |
| 112a | Antrieb Laserachse |
| 150 | Blech |
| 190 | Lage-Ist-Positionsgeber |
| 192 | Lage-Ist-Positionsgeber |
| 194 | Ist-Position |
| 210 | Verfahrbereich TCP |
| 220 | Soll-Abstand Tisch |
| 230 | Ist-Abstand Tisch |
| 240 | Schleppabstand |
| 250 | Abstand MNP-TCP |
| 260 | Ist-Abstand TCP-Tisch |
| 410, 420, 422, 424, 426, 430, 500 | Regler |

**Patentansprüche**

**1.** Verfahren zur Positionierung wenigstens eines Paares (x1, x2; y1, y2) von Bewegungsachsen einer Maschine, welche parallel zueinander verlaufen, zum Anfahren einer vorgegebenen Zielposition, **gekennzeichnet durch** eine Zerlegung der Positionierung in eine Grobpositionierung der ersten Bewegungsachse (x1; y1 und eine Feinpositionierung der zweiten Bewegungsachse (x2; y2), wobei die erste Bewegungsachse eine größere Schwingneigung aufweist als die zweite Bewegungsachse, und **durch** eine Kompensation eines Schleppfehlers der ersten Bewegungsachse (x1; y1) **durch** eine Positionierung der zweiten Bewegungsachse (x2; y2), die auf der Grundlage eines prädiktiven Schleppfehlermodells unter Verwendung einer Soll-Position der ersten Bewegungsachse (x1; y1) erfolgt.

**2.** Verfahren nach Anspruch 1, **dadurch gekennzeichnet, dass** das prädiktive Schleppfehlermodell in einem Antrieb (112a) für die zweite Bewegungsachse (x2; y2) bestimmt wird.

**3.** Verfahren nach Anspruch 1 oder 2, **dadurch gekennzeichnet, dass** das prädiktive Schleppfehlermodell weiter mittels einer Ist-Position der ersten Bewegungsachse (x1; y1) korrigiert wird.

4. Verfahren nach Anspruch 3, **dadurch gekennzeichnet, dass** die Ist-Position der ersten Bewegungsachse (x1; y1) dem Antrieb (112a) der zweiten Bewegungsachse (x2; y2) über eine zyklische Kommunikationsschnittstelle (185) zur Verfügung gestellt wird.

5. Verfahren nach Anspruch 4, **dadurch gekennzeichnet, dass** die Ist-Position der ersten Bewegungsachse (x1; y1) dem Antrieb (112a) für die zweite Bewegungsachse (x2; y2) über eine zyklische Kommunikationsschnittstelle (185) von dem Antrieb (102a) für die erste Bewegungsachse (x1; y1) zur Verfügung gestellt wird.

6. Verfahren nach einem der vorstehenden Ansprüche, **dadurch gekennzeichnet, dass** eine übergeordnete Steuerung (120) Positions-Sollwerte an die Bewegungsachsen (x1, x2; y1, y2) gibt.

7. Vorrichtung mit Mitteln zur Positionierung wenigstens eines Paares (x1, x2; y1, y2) von Bewegungsachsen, welche parallel zueinander verlaufen, zum Anfahren einer vorgegebenen Zielposition, **gekennzeichnet durch** Mittel (102a, 112a) zur Zerlegung der Positionierung in eine Grobpositionierung der ersten Bewegungsachse (x1; y1) und eine Feinpositionierung der zweiten Bewegungsachse (x2; y2), wobei die erste Bewegungsachse eine größere Schwingneigung aufweist als die zweite Bewegungsachse, und Mittel (102a, 185, 112a, 190, 192, 194) zur Kompensation eines Schleppfehlers der ersten Bewegungsachse (x1; y1) durch eine Positionierung der zweiten Bewegungsachse (x2; y2), die auf der Grundlage eines prädiktiven Schleppfehlermodells unter Verwendung einer Soll-Position der ersten Bewegungsachse (x1; y1) erfolgt.

8. Vorrichtung nach Anspruch 7, **gekennzeichnet durch** eine Antrieb (102a) für die erste Bewegungsachse (x1; y1) und einen Antrieb (112a) für die zweite Bewegungsachse (x2; y2), wobei das prädiktive Schleppfehlermodell in dem Antrieb (112a) für die zweite Bewegungsachse (x1; y1) bestimmt wird.

9. Vorrichtung nach Anspruch 7 oder 8, **dadurch gekennzeichnet, dass** sie als Stanz-Lasermaschine mit einem Tisch (102) und einem Laserkopf (112) ausgebildet ist.

10. Vorrichtung nach einem der Ansprüche 7, 8 order 9, **gekennzeichnet durch** eine SERCOS-Schnittstelle zur Gewährleistung der Kommunikation wischen einer Steuereinrichtung (120) zur Bereitstellung von Soll-Positionswerten und Antrieben (102a, 112a) zur Zerlegung der Lageregelung in die Grobpositionierung der ersten Bewegungsachse und die Feinpositionierung der zweiten Bewegungsachse.

11. Verwendung eines Verfahrens nach einem der vorstehenden Ansprüche 1 bis 6 bei einer Stanze Lasermaschine.

**Claims**

1. Method for positioning of at least one pair (x1, x2; y1, y2) of movement axes of a machine, which run parallel to one another, in order to move to a predetermined destination position, **characterized by** the positioning process being broken down into a rough positioning of the first movement axis (x1; y1) and fine positioning of the second movement axis (x2; y2), wherein the first movement axis has a greater tendency to oscillate than the second movement axis, and by compensation for a slip error on the first movement axis (x1; y1) by positioning of the second movement axis (x2; y2), which is carried out on the basis of a predictive slip error model using a nominal position of the first movement axis (x1; y1).

2. Method according to Claim 1, **characterized in that** the predictive slip error model is determined in a drive (112a) for the second movement axis (x2; y2).

3. Method according to Claim 1 or 2, **characterized in that** the predictive slip error model is also corrected by means of an actual position of the first movement axis (x1; y1).

4. Method according to Claim 3, **characterized in that** the actual position of the first movement axis (x1; y1) is made available to the drive (112a) of the second movement axis (x2; y2) via a cyclic communication interface (185).

5. Method according to Claim 4, **characterized in that** the actual position of the first movement axis (x1; y1) is made available to the drive (112a) for the second movement axis (x2; y2) via a cyclic communication interface (185) from the drive (102a) for the first movement axis (x1; y1).

6. Method according to one of the preceding claims, **characterized in that** a superordinate control (120) passes position nominal values to the movement axes (x1, x2; y1, y2).

7. Apparatus having means for positioning at least one pair (x1, x2; y1, y2) of movement axes, which run parallel to one another, for moving to a predetermined destination position, **characterized by** means (102a, 112a) for breaking the positioning process down into rough positioning of the first movement axis (x1; y1) and fine positioning of the second movement axis (x2; y2), wherein the first movement axis has a greater tendency to oscillate than the second movement axis, and means (102a, 185, 112a, 190, 192, 194) for compensating for a slip error of the first movement axis (x1; y1) by positioning of the second movement axis (x2; y2), which is carried out on the basis of a predictive slip error model using a nominal position of the first movement axis (x1; y1).

8. Apparatus according to Claim 7, **characterized by** a drive (102a) for the first movement axis (x1; y1 and a drive (112a) for the second movement axis (x2; y2), wherein the predictive slip error model is determined in the drive (112a) for the second movement axis (x1 y1).

9. Apparatus according to Claim 7 or 8, **characterized in that** the apparatus is in the form of a stamping laser machine having a table (102) and a laser head (112) .

10. Apparatus according to one of Claims 7, 8 and 9, **characterized by** a SERCOS interface in order to ensure the communication between a control device (120) for providing nominal position values and drives (102a, 112a) for breaking down the orientation control process into rough positioning of the first movement axis and fine positioning of the second movement axis.

11. Use of a method according to one of the preceding Claims 1 to 6 for a stamping laser machine.

**Revendications**

1. Procédé de positionnement d'au moins une paire d'axes de mobilité (x1, x2 ; y1, y2) parallèles d'une machine, pour arriver dans une position de destination prédéfinie,
**caractérisé par**
la décomposition du positionnement en un positionnement grossier du premier axe de mobilité (x1, y1 et un positionnement fin du second axe de mobilité (x2, y2), le premier axe de mobilité ayant une plus grande tendance à vibrer que le second axe de mobilité, et par la compensation de l'erreur de trainée du premier axe de mobilité (x1 y1 par le positionnement du second axe de mobilité (x2, y2) sur la base d'un modèle prévisionnel d'erreur de trainée en utilisant une position de consigne du premier axe de mobilité (x1, y1).

2. Procédé selon la revendication 1,
**caractérisé en ce que**
le modèle prévisionnel d'erreur de trainée se détermine dans un moyen d'entraînement (112a) du second axe de mobilité (x2, y2).

3. Procédé selon la revendication 1 ou 2,
**caractérisé en ce qu'**
on corrige le modèle prévisionnel d'erreur de trainée en plus par la position réelle du premier axe de mobilité (x1, y1).

4. Procédé selon la revendication 3,
**caractérisé en ce qu'**
on fournit la position réelle du premier axe de mobilité (x1 y1 au moyen d'entraînement (112a) du second axe de mobilité (x2, y2) par une interface de communication cyclique (185).

5. Procédé selon la revendication 4,
**caractérisé en ce qu'**
on fournit la position réelle du premier axe de mobilité (x1 y1 au moyen d'entraînement (112a) du second axe de mobilité (x2, y2) par une interface de communication cyclique (185) à partir du moyen d'entraînement (102a) du premier axe de mobilité (x1 y1.

6. Procédé selon l'une quelconque des revendications précédentes,
   **caractérisé en ce qu'**
   une installation de commande principale (120) fournit des valeurs de consigne de position aux axes de mobilité (x1 x2 ; y1 y2).

7. Dispositif comportant des moyens de positionnement d'au moins une paire d'axes de mobilité (x1 x2 ; y1, y2) parallèles, pour se placer dans une position de destination prédéfinie,
   **caractérisé par**
   des moyens (102a, 112a) pour décomposer le positionnement en un positionnement grossier du premier axe de mobilité (x1, y1) et un positionnement enfin du second axe de mobilité (x2, y2), le premier axe de mobilité ayant une plus grande tendance à vibrer que le second axe de mobilité, et
   des moyens (102a, 185, 112a, 190, 192, 194) pour compenser l'erreur de trainée du premier axe de mobilité (x1, y1) par le positionnement du second axe de mobilité (x2, y2) sur la base d'un modèle prévisionnel d'erreur de trainée en utilisant la position de consigne du premier axe de mobilité (x1, y1).

8. Dispositif selon la revendication 7,
   **caractérisé par**
   un moyen d'entraînement (102a) pour le premier axe de mobilité (x1, y1) et un moyen d'entraînement (112a) pour le second axe de mobilité (x2, y2),
   le modèle prévisionnel d'erreur de trainée se définissant dans le moyen d'entraînement (112a) du second axe de mobilité (x1, y1).

9. Dispositif selon la revendication 7 ou 8,
   **caractérisé en ce qu'**
   il est réalisé sous la forme d'une machine de découpage par laser comportant un plateau (102) et une tête à laser (112).

10. Dispositif selon l'une quelconque des revendications 7, 8 ou 9,
    **caractérisé par**
    une interface SERCOS pour assurer la communication entre une installation dé commande (120) fournissant les valeurs de consigne de positionnement et les moyens d'entraînement (102a, 112a) pour décomposer la régulation de positionnement en un positionnement grossier du premier axe de mobilité et un positionnement fin du second axe de mobilité.

11. Application d'un procédé selon l'une quelconque des revendications précédentes 1 à 6, à une machine de découpage à laser.

FIG.1

FIG.2

EP 1 927 906 B1

FIG.3

Lageregelkreis

Drehzahlregelkreis

Stromregelkreis

$x_{ist}$

$v_{ist}$

$a_{ist}$

$M_L$

$v_{soll}$

$x_{soll}$

$1/J$

$T_{Gi}$

$K_{pn}$ $T_{Nn}$

$K_v$

426

424

422

410

420

430

FIG. 4

FIG.5

EP 1 927 906 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4420598 A1

- DE 10104795 A1

**In der Beschreibung aufgeführte Nicht-Patentliteratur**

- **von Bong Keun Kim.** Robust synchronizing motiön control of twin-servo systems based on network modeling. *Decision and Control,* 2000, 1019-1024

- **von G. Pritschow.** Hochgenaue Achssynchronisation mit einem konfigurierbaren Bahnmodul. *WERK-STATTSTECHNIK,* vol. 79 (11), 633-636